# EUROPÄISCHE PATENTSCHRIFT

(11) **EP 3 364 283 B1**
(45) Veröffentlichungstag und Bekanntmachung des Hinweises auf die Patenterteilung: **17.08.2022**
(21) Anmeldenummer: 18155089.8
(22) Anmeldetag: 05.02.2018
(51) Int. Cl.: G06F 3/0488, G06F 3/01, G06F 3/0482, G06F 3/0485, B60K 37/00, B60K 35/00, B60K 37/06

(54) **BEDIENSYSTEM, VERFAHREN ZUM BEDIENEN EINES BEDIENSYSTEMS UND EIN FAHRZEUG MIT EINEM BEDIENSYSTEM**
OPERATING SYSTEM, METHOD FOR OPERATING AN OPERATING SYSTEM AND A MOTOR VEHICLE PROVIDED WITH OPERATING SYSTEM
SYSTÈME D'EXPLOITATION, PROCÉDÉ DE FONCTIONNEMENT D'UN SYSTÈME D'EXPLOITATION ET VÉHICULE DOTÉ D'UN SYSTÈME D'EXPLOITATION

(30) Priorität: 18.02.2017 DE 102017001614
(43) Veröffentlichungstag der Anmeldung: 22.08.2018
(73) Patentinhaber: MAN Truck & Bus SE, 80995 München (DE)
(72) Erfinder: Mohra, Holger, 80805 München (DE); Arnold, Claus, 93161 Sinzing (DE); Zademach, Martin, 85055 Ingolstadt (DE); Güllich, Johannes, 85229 Markt Indersdorf (DE); Ochs, Thomas, 82178 Puchheim (DE)
(74) Vertreter: v. Bezold & Partner Patentanwälte - PartG mbB

(56) Entgegenhaltungen:
- EP-A1- 1 990 742
- EP-A2- 2 674 834
- WO-A1-2013/104378
- ISOCNETProducts: "Microsoft Office 365 - Outlook 2013 - Calendar Training", Youtube, 13 December 2013 (2013-12-13), page 2 pp., XP054981568, Retrieved from the Internet: URL:https://www.youtube.com/watch?v=A2GfZA yeeBA [retrieved on 2021-03-18]

## Beschreibung

Die Erfindung betrifft ein Bediensystem, ein Verfahren zum Bedienen eines Bediensystems und ein Fahrzeug mit einem Bediensystem.

Solche Bediensysteme bilden in Fahrzeugen eine Benutzerschnittstelle bzw. eine Mensch-Maschinen-Schnittstelle, über die ein Nutzer Einfluss auf fahrzeugintegrierte Funktionen nehmen oder Informationen über eine bestimmte Fahrzeugfunktion abrufen kann. Wesentliche Bestandteile des Bediensystems sind ein Eingabeelement, eine Anzeigevorrichtung und eine Steuervorrichtung, wobei das Eingabeelement und die Anzeigevorrichtung an die Steuervorrichtung gekoppelt sind und die Steuervorrichtung derart ausgestaltet ist, dass sie - insbesondere abhängig von einer Eingabe des Nutzers mittels des Eingabeelements - eine Anzeige auf der Anzeigevorrichtung steuert bzw. kontrolliert.

In der EP 1 990 742 A1 wird ein Verfahren zur Kontrolle von Webseiten-Favoritenlisten auf Mobiltelefonen beschrieben, in dem vom Nutzer ausgewählte Webseiten symbolisch, entweder als Miniaturbild des Webseitenbildes oder als vom Nutzer gewähltes Textkürzel, gespeichert und zusammen mit Symbolen derselben Art anderer Favoritenlisten-Einträge auf dem Bildschirm angezeigt werden können. Bei einer Markierung einer Favoriten-Webseite überblendet das zugehörige Symbol die Symbole der anderen angezeigten Favoritenlisten-Einträge teilweise, um nach Bestätigung der Auswahl den Bildschirm im Wesentlichen vollständig auszufüllen.

In der EP 2 674 834 A2 wird ein tragbares Gerät, beispielsweise ein Smartphone, mit zwei Touchscreens beschrieben, welche mittels eines Scharniers zusammen- oder auseinandergefaltet und dann als ein einzelner großer Touchscreen verwendet werden können. Die Eingabemöglichkeiten eines Nutzers setzen sich aus auf die Touchscreens ausgerichteten Gesten und Faltbewegungen der beiden Touchscreens zusammen. In einer Fotogalerie-Anwendung werden beispielsweise zunächst Miniaturbilder in einem Gitter auf beiden Touchscreens angezeigt. Nach Auswahl eines Miniaturbilds, z.B. durch Antippen, ersetzt ein vergrößertes Abbild des ausgewählten Miniaturbildes das Gitter aus Miniaturbildern auf dem zweiten Touchscreen. Durch eine weitere festgelegte Berührungsgeste des zweiten Touchscreens kann das ausgewählte Bild so vergrößert bzw. herangezoomt werden, dass es auch das Gitter auf dem ersten Touchscreen verdrängt und beide Touchscreens vollständig ausfüllt.

WO 2013/104378 A1 beschreibt ein Verfahren und eine Vorrichtung zum Erzeugen einer 3D-Darstellung einer Benutzeroberfläche in einem Fahrzeug.

Beispielsweise lässt sich mit dem Bediensystem zwischen Radiosendern wechseln. Dabei werden die einzelnen Radiosender dem Nutzer als Listenelemente bereitgestellt und der Nutzer kann mittels einer Auswahl eines der Listenelemente den Radiosender wechseln oder auswählen. Allerdings kann der Nutzer anhand der Listenelemente keine Informationen, insbesondere keine aktuellen Informationen, über das derzeitige Programm erfahren, so dass der Nutzer erst durch die Auswahl erfährt, ob er die für ihn richtige Auswahl getroffen hat. Dies kann unter Umständen zu einem häufigen Wechsel zwischen einem ersten Anzeigemodus, in dem die Listenelemente dargestellt sind, und einem zweiten Anzeigemodus, in dem ein zum Listenelement zugeordnetes Hauptelement, beispielswiese ein bestimmter Radiosender, dargestellt ist, führen. Dies kostet den Nutzer, insbesondere den Fahrer, nicht nur viel Zeit, sondern lenkt ihn vom aktuellen Verkehr ab, wodurch ein Unfallrisiko steigt.

Es ist daher eine Aufgabe der vorliegenden Erfindung, ein Bediensystem bereitzustellen, mit dem die Wahrscheinlichkeit für eine versehentliche Auswahl eines Listenelements am Bediensystem reduziert wird.

Diese Aufgabe wird durch ein Bediensystem, ein Verfahren zum Betreiben des Bediensystems und ein Fahrzeug mit einem Bediensystem mit den Merkmalen des unabhängigen Anspruchs gelöst. Vorteilhafte Ausführungsform und Anwendungen der Erfindung ergeben sich aus den anhängigen Ansprüchen und werden in der folgenden Beschreibung unter teilweiser Bezugnahme auf die Figuren näher erläutert.

Gemäß einem ersten Gesichtspunkt ist ein Bediensystem zum Auswählen einzelner in einer Liste sortierter Listenelemente vorgesehen, dessen wesentliche Bestandteile eine Anzeigevorrichtung mit einer Anzeigefläche, eine Steuervorrichtung und ein Eingabeelement sind. Die auswählbaren Listenelemente, die beispielsweise einzelne Musiksender oder Musikalben sein können, sind zusammen mit Vorschauelementen und Hauptelementen, die paarweise den Listenelementen zugeordnet sind, in einer Speichereinrichtung gespeichert. Unter paarweise ist insbesondere eine gemeinschaftliche Zuordnung zum Listenelement zu verstehen, die sich im Wesentlichen dadurch auszeichnet, dass das Vorschauelement und das Hauptelement inhaltlich bzw. logisch untereinander und mit dem Listenelement im Zusammenhang stehen.

Zudem ist die Steuervorrichtung an das Eingabeelement und die Anzeigevorrichtung gekoppelt, wodurch insbesondere eine kommunikative Verbindung einerseits zwischen der Steuervorrichtung und dem Eingabeelement und andererseits zwischen der Steuervorrichtung und der Anzeigevorrichtung realisiert ist.

Grundsätzlich ist die Steuervorrichtung dabei derart ausgestaltet, dass mit ihr eine wiedergebende Anzeige auf der Anzeigefläche steuerbar ist. Dadurch lassen sich beispielsweise von dem Eingabeelement kommende Befehle durch die Steuervorrichtung auf der Anzeigefläche visualisieren. Unter Steuern ist dabei grundsätzlich sowohl eine Veranlassung einer Anzeige als auch eine Modifikation des auf der Anzeige Dargestellten zu verstehen. Dabei ist die Anzeigefläche durch die Steuervorrichtung derart ansteuerbar, dass in einem ersten Anzeigemodus auf der Anzeigefläche zumindest ein Teil der Listenelemente in einer Liste angezeigt wird.

Ein Markierungswechsel zwischen einem Listenelement und einem weiteren Listenelement lässt sich mittels des Eingabeelements vollziehen, wobei bei einer Markierung eines Listenelements das Vorschauelement, das dem markierten Listenelement zugeordnet ist, neben der Liste in einem Informationsfenster zum Bereitstellen einer Vorschau auf einen Gesamtinhalt des Hauptelements angezeigt wird.

Hierbei ist es vorgesehen, dass das Informationsfenster einen größeren Flächenanteil auf der Anzeigefläche als das markierte Listenelement einnimmt, um dem Nutzer auf leicht zugängliche Weise Vorabinformationen, beispielsweise in Gestalt einer schlagwortartigen Zusammenfassung über das aktuelle Programm des markierten Listenelements, anzugeben. Ferner ist es vorgesehen, dass beim Markierungswechsel im ersten Anzeigemodus ein weiteres Informationsfenster für ein weiteres Vorschauelement, das dem weiteren Listenelement zugeordnet ist, an die Stelle des bisherigen Informationsfensters nachrückt. Dadurch sind dem Nutzer Vorabinformationen bereits beim Markierungswechsel zugänglich, ohne dass der Nutzer eine Auswahl vornehmen muss.

Grundsätzlich ist es dabei vorgesehen, dass durch eine Auswahl des markierten Listenelements ein Wechsel vom ersten Anzeigemodus zu einem zweiten Anzeigemodus realisiert wird, wobei im zweiten Anzeigemodus das Hauptelement, das insbesondere Detailinformationen, wie z. B. einen aktuellen Titel, eine noch abzuspielende Dauer eines Musikstücks oder das Radioprogramm des ausgewählten Radiosenders, enthält, statt des Vorschauelements, insbesondere statt des Vorschauelements und des Listenelements, auf der Anzeigefläche angezeigt wird. Während also mit einer Auswahl ein Wechsel in den zweiten Anzeigemodus veranlasst wird, verbleibt die Anzeigefläche beim Markieren im ersten Anzeigemodus. Mit dem Markieren wird hierbei vorzugsweise eine Vorauswahl getroffen, während mit der Auswahl diese Vorauswahl bestätigt und eine Entscheidung für das entsprechende markierte Listenelement getroffen wird.

Gegenüber dem Stand der Technik erlaubt das erfindungsgemäße Vorschauelement dem Nutzer einen Einblick auf den Inhalt des Hauptelements, so dass er bereits beim Markieren Vorabinformationen, beispielsweise in Gestalt von schlagwortartigen Zusammenfassungen, erhält und damit die Wahrscheinlichkeit für eine versehentliche Auswahl eines Listenelements, die sich nach der Auswahl als unerwünscht herausstellt, reduziert wird. Zudem erlaubt die Nutzung von Informationsfenstern neben den listenartig auf der Anzeigefläche angezeigten Listenelementen eine ausreichend große Darstellung, die dem Nutzer auf einen Blick wesentliche bzw. zur Entscheidungsfindung maßgeblich beitragende Vorabinformationen für die Auswahl gibt.

Hierbei ist es weiterhin vorstellbar, dass die Auswahl der Hauptelemente bereits an einen Zustandswechsel einer fahrzeugintegrierten Funktion gekoppelt ist, d. h. beispielsweise bereits bei der Auswahl ein Radiosenderwechsel vorgenommen wird. Als weiterhin vorteilhaft erweist es sich, dass das Hauptelement anstatt des Vorschauelements angezeigt wird, so dass die Angabe von Vorabinformationen der Vorschauelemente ersetzt werden, sobald eine Auswahl vorgenommen wurde und die Vorabinformationen nicht länger benötigt werden.

Entsprechend ist es insbesondere vorgesehen, dass ein Flächenanteil des Hauptelements im zweiten Anzeigemodus auf der Anzeigefläche größer ist als der Flächenanteil des Vorschauelements im ersten Anzeigemodus. Dadurch lassen sich die beispielsweise mit dem Hauptelement verbundene Detailinformationen dem Nutzer auf einer ausreichend großen Fläche auf der Anzeigefläche bereitstellen.

Vorzugsweise ist es vorgesehen, dass das Bediensystem Teil eines Infotainmentsystems ist. Weiterhin ist es insbesondere vorgesehen, dass die Steuervorrichtung als Prozessor mit einem abgespeicherten Computerprogramm ausgebildet ist. Dabei ist es vorstellbar, dass die Steuervorrichtung räumlich getrennt ist von der Anzeigevorrichtung und dem Eingabeelement. Ferner ist es denkbar, dass die Speichereinrichtung in die Steuervorrichtung integriert ist. Beispielsweise ist die Anzeigevorrichtung in das Armaturenbrett eingelassen. Weiterhin ist es vorgesehen, dass das Bediensystem derart ausgestaltet ist, dass Vorabinformationen des Vorschauelements und Detailinformationen des Hauptelements ständig bzw. regelmäßig aktualisiert werden.

Weiterhin ist es vorzugsweise vorgesehen, dass die Listenelemente und die zu dem jeweiligen Listenelement zugehörigen Vorschauelemente separat nebeneinander dargestellt sind, d. h. zwischen den nebeneinander angeordneten Listenelementen und Vorschauelement ein Freibereich auf der Anzeigefläche zu erkennen ist.

Gemäß der vorliegenden Erfindung ist vorgesehen, dass bei einem in Listendurchlaufrichtung, insbesondere in Bildlaufrichtung, erfolgenden Markierungswechsel zwischen dem Listenelement und einem oder mehreren weiteren Listenelementen ein korrespondierender Bildlauf in dieselbe Listendurchlaufrichtung, insbesondere in dieselbe Bildlaufrichtung, für das Informationsfenster des Vorschauelements und das weitere Informationsfenster der Vorschauelemente, die dem einen oder den mehreren weiteren Listenelementen jeweils zugeordnet sind, realisiert wird. Dadurch lässt sich in vorteilhafter Weise eine intuitive Verknüpfung des weiteren Vorschauelements mit dem zum bisher ausgewählten Listenelement benachbarten Listenelement erstellen, wenn ein Markierungswechsel vom Listenelement zum benachbarten Listenelement erfolgt. Dabei erfolgt ein Listendurchlauf, d. h. eine Scroll-Bewegung auf Veranlassung des Eingabeelements bzw. durch einen Betätigungsvorgang am Eingabeelement. Insbesondere versteht der Fachmann unter einem Bildlauf einen Listendurchlauf, bei dem Listenelemente nacheinander markiert werden und gegebenenfalls auf die Anzeigefläche nachrücken. Hierbei ist es vorstellbar, dass beim Markierungswechsel in eine Bildlaufrichtung zwischen dem Listenelement und dem benachbarten Listenelement kein Bildlauf sondern ein reiner Listendurchlauf veranlasst wird, d. h. die Listenelemente statisch angezeigt werden, während ein Bildlauf für die Informationsfenster erfolgt.

Vorzugsweise ist die Anzeigefläche durch die Steuervorrichtung derart ansteuerbar, dass im ersten Anzeigemodus durch die Markierung des Listenelements das Vorschauelement zeitgleich oder leicht zeitversetzt zum Betätigungsvorgang, der die Markierung auslöst, bereitgestellt wird. Dadurch erhält der Nutzer in vorteilhafter Weise möglichst zeitnah Vorabinformationen über das Vorschauelement und dem Nutzer wird zudem die Möglichkeit gegeben, schnell Markierungswechsel vorzunehmen und dabei jedes Mal Vorabinformationen durch das Vorschauelement zu erhalten. Vorzugsweise erfolgt der Wechsel zwischen den Vorschauelementen durch eine Animationsbewegung. Hierbei ist es vorstellbar, dass eine Geschwindigkeit, mit der zwischen Vorschauelementen gewechselt wird, einstellbar ist. Alternativ oder ergänzend ist es auch denkbar, dass die Art der Bewegung und/oder ein Animationseffekt einstellbar ist. Hierzu greift der Nutzer vorzugsweise auf eine Vorauswahl aus verschiedenen, vorzugsweise abgespeicherten, Bewegungsformen und/oder Animationseffekten für die Vorschauelemente zurück. Dadurch ist es in vorteilhafter Weise möglich, dass der Nutzer die Darstellung der Vorschauelemente so auf sich abstimmen bzw. personalisieren kann, dass er die Vorschauelemente möglichst schnell wahrnehmen kann.

Weiterhin ist es vorgesehen, dass eine Informationsmenge der Hauptelemente größer ist als die Informationsmenge der jeweils korrespondierenden Vorschauelemente. Entsprechend ist ein dem Hauptelement zugeordneter Speicherplatz größer als der dem Vorschauelement zugeordnete Speicherplatz. Dies erweist sich insbesondere als vorteilhaft, da bei vergleichsweise schnellen Markierungswechseln die vergleichsweise umfangreichen Detailinformationen des Hauptelements nicht in das Informationsfenster geladen werden müssen. Zudem wird der Nutzer nicht durch eine zu große Menge an Detailinformationen abgelenkt. Stattdessen wird eine reduzierte Informationsmenge in das Informationsfenster geladen. Dabei sind die die Vorabinformation aufweisenden Informationsmengen beispielsweise schlagwortartige Zusammenfassungen aus bestimmten thematischen Kategorien. Vorgesehen ist auch, dass der Nutzer einstellen kann, welche Kategorien bzw. deren schlagwortartige Zusammenfassungen auf der Anzeigefläche dargestellt werden. Dadurch kann der Nutzer in vorteilhafter Weise das Vorschauelement bzw. das Informationsfenster personalisieren, so dass dem Nutzer die für eine möglichst zutreffende Auswahl bestmöglichen Vorabinformationen bereitgestellt werden können.

Ferner ist es vorgesehen, dass das Listenelement eine Sammelbezeichnung, das Vorschauelement im Informationsfenster eine zusammenfassende Inhaltsübersicht für den Gesamtinhalt des Hauptelements, z. B. in Form einer schlagwortartigen Zusammenfassung, und das Hauptelement den Gesamtinhalt, z. B. einer aktuellen Fahrzeuginformation, bereitstellt. Vorstellbar ist auch, dass die Informationsmenge des Vorschauelements eine Teilmenge der Gesamtinformationen des Hauptelements ist oder durch ein Schlagwort dem Nutzer ein Hinweis auf das Hauptelement gegeben wird.

Gemäß einer weiteren Ausführungsform der vorliegenden Erfindung ist vorgesehen, dass die Anzeigefläche durch die Steuervorrichtung derart ansteuerbar ist, dass im zweiten Anzeigemodus auf der Anzeigefläche im Wesentlichen ausschließlich das Hauptelement dargestellt wird. Dadurch wird dem Hauptelement für seine Darstellung ein möglichst großer Flächenbereich bereitgestellt. Unter im Wesentlichen ausschließlich versteht der Fachmann insbesondere eine ausfüllende Darstellung der Anzeigefläche, wobei Dekorationselemente oder Menüleisten als hauptelementfremde Bestandteile noch auf der Anzeigefläche erscheinen können. Vorzugsweise nimmt das Hauptelement im zweiten Anzeigemodus denjenigen Flächenbereich ein, der im ersten Anzeigemodus von den dargestellten Listenelementen der Liste und dem Informationsfenster in Anspruch genommen wurde.

Vorzugsweise ist es vorgesehen, dass die Anzeigefläche durch die Steuervorrichtung derart ansteuerbar ist, dass im ersten Anzeigemodus zumindest ein Teil des Informationsfensters für das weitere Vorschauelement, das dem zum aktuell markierten Listenelement benachbarten weiteren Listenelement zuzuordnen ist, auf der Anzeigefläche angezeigt wird. Vorstellbar ist dabei, dass das weitere Vorschauelement leicht versetzt hinter dem aktuellen Vorschauelement angeordnet ist und dass vorzugsweise ein Teil der Vorabinformationen zu erkennen ist. Auch denkbar ist, dass sich das Vorschauelement und das weitere Vorschauelement überlappen und wegen einer bereichsweise transparenten Ausgestaltung des Vorschauelements einzelne Vorabinformationen des weiteren Vorschauelements bereits erkennbar sind. Durch das simultane Darstellen des Vorschauelements und des weiteren Vorschauelements kann der Nutzer bereits Einblick auf zumindest einen Teil der Vorabinformationen eines nichtmarkierten Listenelements erhalten.

In einer weiteren Ausführungsform der vorliegenden Erfindung ist vorgesehen, dass die Anzeigefläche durch die Steuervorrichtung derart ansteuerbar ist, dass im ersten Anzeigemodus zumindest ein Teil des weiteren Informationsfensters für das weitere Vorschauelement, das dem zum aktuell markierten Listenelement benachbarten weiteren Listenelement zuzuordnen ist, im Bereich einer Anzeigenflächenkante angezeigt wird. Die Anzeigeflächenkante begrenzt hierbei die Anzeigefläche zu einer Seite hin. Vorzugsweise handelt es sich um die Anzeigenflächenkante am oberen oder unteren Rand der Anzeigefläche, die vorzugsweise oberhalb oder unterhalb des Vorschauelements angeordnet ist. Durch die Anordnung des weiteren Vorschaubereichs unmittelbar ober- oder unterhalb des Vorschauelements zum aktuell markierten Listenelement wird dem Nutzer auf intuitive Weise die Zuordnung der weiteren Vorschauelemente zu den jeweils zum ausgewählten Listenelement benachbarten Listenelementen nahegelegt.

Weiterhin ist es in einer bevorzugten Ausführungsform der vorliegenden Erfindung vorgesehen, dass die Anzeigefläche durch die Steuervorrichtung derart ansteuerbar ist, dass ein aktueller Zustand des Markierungswechsels im Bereich der Listenelemente durch ein Navigationshilfsmittel, beispielsweise in Form einer Darstellung eines Pfeils oder einer Hand mit einem Zeigefinger, visualisiert ist oder im Falle eines Touchscreens durch die Position eines mit dem Touchscreen in Kontakt stehenden Gegenstands, beispielsweise einem Finger des Nutzers, festgelegt ist. Dadurch lässt sich ein kontinuierlich vorgenommener Markierungswechsel zwischen dem Listenelement und dem weiteren Listenelement in vorteilhafter Weise visualisieren bzw. festlegen. Insbesondere ist es vorgesehen, dass sich ein fließender Markierungswechsel über mehrere Listenelemente vornehmen lässt, während die Vorschauelemente bzw. weiteren Vorschauelemente entsprechend dem aktuell markierten Listenelement während des fließenden Markierungswechsels wechseln bzw. sich austauschen.

Vorzugsweise ist es vorgesehen, dass die Anzeigefläche durch die Steuervorrichtung derart ansteuerbar ist, dass sich im ersten Anzeigemodus das aktuell markierte Listenelement in seiner visuellen Darstellung, z. B. in Hinblick auf seine Größe oder Hintergrundfarbe, von den nicht-markierten weiteren Listenelementen unterscheidet. Dadurch wird die Zugehörigkeit des aktuell dargestellten Vorschauelements zum aktuell markierten Listenelement hervorgehoben. Beispielsweise unterscheidet sich das aktuell markierte Listenelement von den nicht-markierten Listenelementen in Hinblick auf seine Helligkeit.

Gemäß einer weiteren Ausführungsform der vorliegenden Erfindung ist vorgesehen, dass die Anzeigefläche durch die Steuervorrichtung derart ansteuerbar ist, dass ein Verhältnis zwischen dem Flächenanteil des für das Vorschauelement vorgesehenen Informationsfensters und dem Flächenanteil des für das weitere Vorschauelement vorgesehenen Informationsfensters vom aktuellen Zustand des Markierungswechsels abhängt. Dadurch kann der Nutzer in vorteilhafter Weise bereits mehrere Vorabinformationen im weiteren Vorschauelement erkennen, bevor der Markierungswechsel vollständig vollzogen wurde, wobei als vollständiger Markierungswechsel insbesondere ein solcher zu verstehen ist, bei dem das weitere Vorschauelement an die Stelle des bisherigen Vorschauelements nachgerückt ist und dieses entsprechend ersetzt.

Ferner ist vorgesehen, dass das Eingabeelement einen Drehdrückschalter, eine Walze, einen Touchscreen, ein Mittel zur Erfassung von Gesten und/oder einen Taster auf einem Multifunktionslenkrad oder auf einem Lenkstockhebel umfasst. Ein Drehdrückschalter erweist sich in vorteilhafter Weise als intuitives Eingabeelement, bei dem eine Drehbewegung zur Veranlassung eines mit dem Markierungswechsel einhergehenden Bildlaufs bzw. Listendurchlaufs verknüpft ist und bei einem Drücken das im Bildlauf oder beim Listendurchlauf markierte Listenelement ausgewählt wird. Die Integration des Eingabeelements ins Lenkrad hat den Vorteil, dass der Fahrer beim Fahren nicht erst das beispielsweise in der Mittenkonsole eingelassene Eingabeelement suchen muss. Durch das Mittel zur Erfassung von Gesten, beispielsweise in Form eines Kamerasystems, lässt sich auf einfache Weise eine Auswahl, z. B. durch eine bestimmte Körperbewegung des Nutzers, treffen.

Vorzugsweise ist die Anzeigefläche durch die Steuervorrichtung derart ansteuerbar, dass im ersten Anzeigemodus neben den Listenelementen und dem Informationsfenster eine von den Listenelementen und dem Informationsfenster unabhängige Informationsanzeige, wie z. B. ein Tachometer oder eine Tankanzeige, dargestellt ist.

Ein weiterer Gegenstand der vorliegenden Erfindung ist ein Verfahren zum Bedienen eines erfindungsgemäßen Bediensystems, wobei in einem ersten Anzeigemodus ein Markierungswechsel von einem Listenelement zu einem weiteren Listenelement durchgeführt wird, wobei im ersten Anzeigemodus neben der Liste von Listenelementen das Vorschauelement in einem Informationsfenster zum markierten Listenelement angezeigt wird, wobei beim Markierungswechsel ein weiteres Informationsfenster eines weiteren Vorschauelements, das dem weiteren Listenelement zugeordnet ist, an die Stelle des bisherigen Informationsfensters nachgerückt wird und bei einem durch die Auswahl eines Listenelements veranlassten Wechsel in den zweiten Anzeigemodus auf der Anzeigefläche das Hauptelement statt des Vorschauelements angezeigt wird.

Ein weiterer Gegenstand der vorliegenden Erfindung ist ein Fahrzeug, insbesondere ein Nutzfahrzeug, mit einem erfindungsgemäßen Bediensystem.

Die zuvor beschriebenen bevorzugten Ausführungsformen und Merkmale der Erfindung sind beliebig miteinander kombinierbar. Weitere Einzelheiten und Vorteile des Erfindung werden im Folgenden unter Bezug auf die beigefügten Zeichnungen beschrieben. Es zeigen:
- Fig. 1: Bediensystem gemäß einer beispielhaften Ausführungsform der vorliegenden Erfindung im ersten Anzeigemodus; und
- Fig. 2: Bediensystem gemäß der beispielhaften Ausführungsform der vorliegenden Erfindung im ersten und zweiten Anzeigemodus.

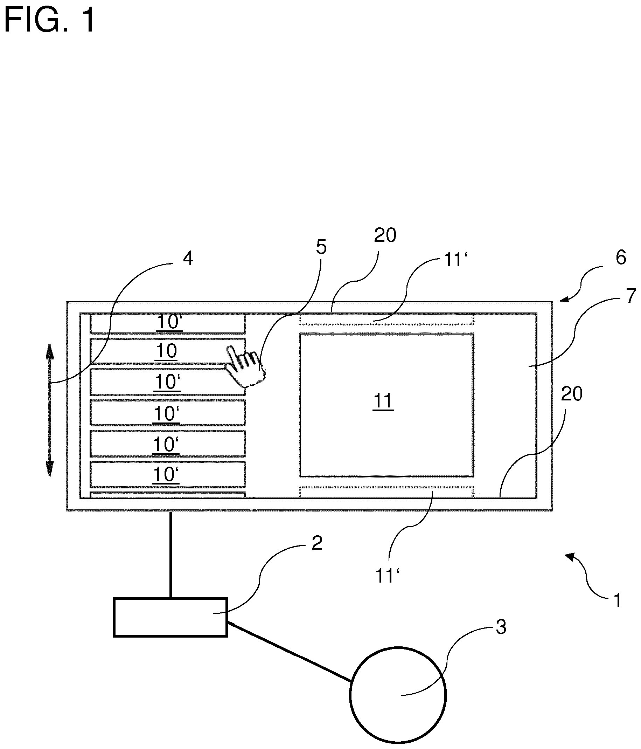

In Figur 1 ist ein Bediensystem 1 gemäß einer beispielhaften Ausführungsform der vorliegenden Erfindung dargestellt. Insbesondere handelt es sich um ein Bediensystem mit einer Anzeigevorrichtung 6, die beispielsweise in ein Armaturenbrett eingelassen ist. Eine solche Anzeigevorrichtung 6 umfasst eine Anzeigefläche 7, auf der Informationen über den aktuellen Fahrzeugzustand oder bestimmte Fahrzeugfunktionalitäten dem Nutzer, beispielsweise dem Fahrer, bereitgestellt werden. Das Bediensystem 1 dient dabei insbesondere dazu, eine Benutzerschnittstelle bereitzustellen, über die ein Nutzer gezielt eine fahrzeugintegrierte Funktion, wie z. B. einen bestimmten Radiosender, einstellen kann. Zur Auswahl werden dem Nutzer dabei vorzugsweise in einer Liste angezeigte Listenelemente 10, 10' angezeigt, die er mittels eines Betätigungsvorgangs an einem Eingabeelement 3 anwählen bzw. markieren und schließlich durch einen weiteren Betätigungsvorgang das markierte Listenelement 10 auswählen kann. Zur Umsetzung dieser Funktionalität ist eine Steuervorrichtung 2 vorgesehen, die einerseits mit der Anzeigevorrichtung 6 und andererseits mit dem Eingabeelement 3 gekoppelt ist. Beispielsweise ist die Steuervorrichtung 2 als Prozessor mit abgespeichertem Computerprogramm ausgestaltet. In dem in Figur 1 schematisch dargestellten Ausführungsbeispiel ist das Eingabeelement 3 als Drehdrückschalter ausgestaltet, dessen Drehbewegung von der Steuervorrichtung 2 zu einem gezielten Markierungswechsel 8, d. h. zu einem Wechsel eines Markierungszustands zwischen den einzelnen Listenelementen 10, 10', herangezogen wird, während mittels eines Drückens eine Auswahl des zuvor markierten Listenelements 10 vollzogen werden kann. In der in Figur 1 dargestellten Ausführungsform ist es insbesondere vorgesehen, dass die Listenelemente 10, 10' in einer Liste dargestellt sind und ein Markierungswechsel 8 mittels eines Listendurchlaufs oder Bildlaufs in einer, insbesondere durch das Eingabeelement 3 vorgegebenen, Listendurchlaufrichtung oder Bildlaufrichtung 4 durchgeführt werden kann. Insbesondere erlaubt es der Bildlauf, das z. B. nicht dargestellte Listenelemente 10, 10' auf die Anzeigefläche 7 nachrücken. Um die Wahrscheinlichkeit zu reduzieren, dass ein Nutzer ein Listenelement 10 auswählt und nach der Auswahl feststellen muss, dass er die für ihn falsche Auswahl getroffen hat, ist es insbesondere vorgesehen, dass neben der Liste jeweils zum aktuell markierten Listenelement 10 ein Vorschauelement 11 angezeigt wird. Hierbei ist es insbesondere vorgesehen, dass das Vorschauelement 11 in einem Informationsfenster angezeigt wird, in dem Informationen zusammengefasst sind, die den Nutzer über ein Hauptelement 12, zu dem der Nutzer Zugang erhält, sobald er das aktuell markierte Listenelement 10 auswählt, informieren. Dabei ist ein von dem Informationsfenster eingenommener Flächenanteil größer als derjenige, der von dem einzelnen Listenelement 10, 10' eingenommen wird, wodurch sich eine dem Vorschauelement 11 zugeordnete Informationsmenge auf dem Informationsfenster von der Steuervorrichtung 2 so anzeigen lässt, dass der Nutzer die vom Vorschauelement 11 bereitgestellten Informationen auf einen Blick erfassen kann. Weiterhin ist es vorgesehen, dass ein weiteres Vorschauelement 11', das einem zum aktuell markierten Listenelement 10 benachbarten weiteren Listenelement 10' zuzuordnen ist, bereits auf der Anzeigefläche 7, insbesondere im Bereich einer Anzeigenflächenkante 20, zumindest teilweise zu erkennen ist. Dadurch ergibt sich für den Nutzer in vorteilhafter Weise die Möglichkeit einer Vorschau auf die Informationen, die dem benachbarten weiteren Listenelement 10' zugeordnet sind.

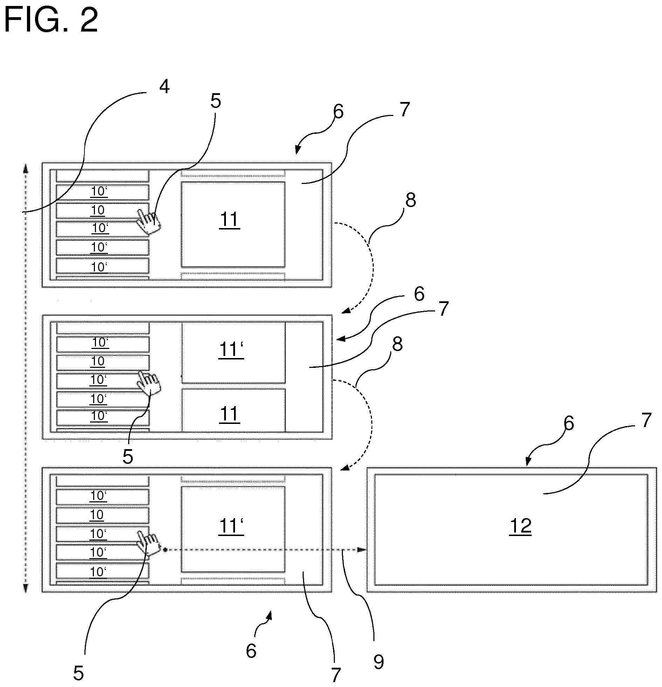

In Figur 2 ist das Bediensystem 1 gemäß der beispielhaften Ausführungsform der vorliegenden Erfindung im ersten und zweiten Anzeigemodus dargestellt. Dabei ist auf der linken Seite die Anzeigefläche 7 im ersten Anzeigemodus bei einem Markierungswechsel 8 zu drei verschiedenen aufeinanderfolgenden Zeitpunkten dargestellt, während auf der rechten Seite die Anzeigefläche 7 im zweiten Anzeigemodus illustriert ist. Im zweiten Anzeigemodus ist das Listenelement 10 ausgewählt und eine dem Hauptelement 12 zugeordnete Informationsmenge, die größer ist als die des Vorschauelements 11, wird auf der Anzeigefläche 7 dargestellt. Insbesondere ist zur Darstellung des Hauptelements 12 ein Informationsfenster vorgesehen, das auf der Anzeigefläche 7 die im ersten Anzeigemodus dargestellte Liste aus Listenelementen 10, 10' und das Vorschauelement 11 ersetzt. Vorzugsweise nimmt das Hauptelement 12 im zweiten Anzeigemodus die Anzeigefläche 7 im Wesentlichen vollständig ein, so dass ausreichend Platz bereitgestellt wird, dass der Nutzer auch detaillierte Information leicht erkennen kann. Im ersten Anzeigemodus, der auf der linken Seite dargestellt ist, ist ein als Hand mit einem Zeigefinger ausgestaltetes Navigationshilfsmittel 5 dargestellt, mit dessen Bewegung über die einzelnen Listenelemente 10, 10' entlang einer Bildlaufrichtung bzw. Listendurchlaufrichtung sich die einzelnen Listenelemente 10, 10' jeweils markieren lassen. Mit anderen Worten: Durch die Bewegung des Navigationshilfsmittels 5, wie sie auf der linken Seite der Figur 2 durch die drei Momentaufnahmen angedeutet ist, wird ein Markierungswechsel 8 entlang der Listendurchlaufrichtung vorgenommen. Dabei ist es insbesondere vorgesehen, dass parallel zum Markierungswechsel ein weiteres Vorschauelement 11', das insbesondere dem zum bisher markierten Listenelement 10 benachbarten weiteren Listenelement 10' zugeordnet ist, an die Stelle des bisherigen Vorschauelements 11 nachrückt bzw. tritt. Insbesondere ist es dabei vorgesehen, dass ein Nachrücken der weiteren Vorschauelemente 11' mittels eines Bildlaufs parallel zur Listendurchlaufrichtung, in der auch der Markierungswechsel 8 vorgenommen wurde, erfolgt. Dadurch erschließt sich dem Nutzer die Zugehörigkeit des weiteren Vorschauelements 11' auf möglichst intuitive Art und Weise. Insbesondere erfolgt das Nachrücken kontinuierlich bzw. stetig, so dass jeder Position des Navigationshilfsmittels 5 beim Markierungswechsel 8 eine Ausrichtung des Vorschauelements 11 und des weiteren Vorschauelements 11' bei deren Austausch zuzuordnen ist. Insbesondere handelt es sich bei dem Nachrücken des weiteren Vorschauelements 11' um eine Coverflow-Funktionalität bzw. einen Coverflow. Durch die Kombination einer listenartigen Darstellung der Listenelemente 10, 10' auf der einen Seite und dem Coverflow der Vorschauelemente 11 bzw. der weiteren Vorschauelemente 11'auf der anderen Seite lassen sich die Vorteile der beiden Darstellungsformen in vorteilhafter Weise vereinen, während sich die Nachteile der verschiedenen Darstellungsformen gegenseitig aufheben.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche.

### Bezugszeichenliste

- 1: Bediensystem
- 2: Steuervorrichtung
- 3: Bedienelement
- 4: Bildlaufrichtung
- 5: Navigationshilfsmittel
- 6: Anzeigevorrichtung
- 7: Anzeigefläche
- 8: Markierungswechsel
- 9: Wechsel
- 10: Listenelement
- 10': weiteres Listenelement
- 11: Vorschauelement
- 11': weiteres Vorschauelement
- 12: Hauptelement
- 20: Anzeigeflächenkante

## Patentansprüche

1. Bediensystem (1) für ein Fahrzeug, wobei das Bediensystem (1)
-- eine Anzeigevorrichtung (6) mit einer Anzeigefläche (7), wobei die Anzeigevorrichtung (6) in ein Armaturenbrett eingelassen ist;
-- eine Speichereinrichtung zum Speichern von Listenelementen (10, 10') sowie Vorschauelementen (11, 11') und Hauptelementen (12), die paarweise dem Listenelement (10, 10') zugeordnet sind,
-- ein Eingabeelement (3) zur Markierung und/oder Auswahl eines Listenelements (10, 10') durch einen Nutzer und
-- eine Steuervorrichtung (2), die an die Anzeigevorrichtung (7) und das Eingabeelement (3) angekoppelt ist und mit der eine wiedergebende Anzeige auf der Anzeigefläche (7) steuerbar ist,
umfasst,
wobei die Anzeigefläche (7) durch die Steuervorrichtung (2) derart ansteuerbar ist, dass
- in einem ersten Anzeigemodus auf der Anzeigefläche (7) zumindest ein Teil der Listenelemente (10, 10') in einer Liste angezeigt wird,
- zum Bereitstellen einer Vorschau auf einen Gesamtinhalt des Hauptelements (12) bei einer Markierung eines Listenelements (10) mittels des Eingabeelements (3) das Vorschauelement (11), das dem markierten Listenelement (10) zugeordnet ist, neben der Liste in einem Informationsfenster (7) angezeigt wird, wobei das Informationsfenster (7) einen größeren Flächenanteil auf der Anzeigefläche (7) als das markierte Listenelement (10) einnimmt,
- ein Markierungswechsel (8) mittels des Eingabeelements (3) von einem Listenelement (10) zu einem weiteren Listenelement (10') vollziehbar ist,
- beim Markierungswechsel (8) im ersten Anzeigemodus ein weiteres Informationsfenster für ein weiteres Vorschauelement (11'), das dem weiteren Listenelement (10') zugeordnet ist, an die Stelle des bisherigen Informationsfensters nachrückt;
- durch eine Auswahl des markierten Listenelements (10) ein Wechsel (9) vom ersten Anzeigemodus zu einem zweiten Anzeigemodus realisiert wird, wobei im zweiten Anzeigemodus das Hauptelement (12) statt des Vorschauelements (11), insbesondere statt des Vorschauelements (11) und des Listenelements (10, 10'), auf der Anzeigefläche (7) angezeigt wird;
wobei die Anzeigefläche (7) durch die Steuervorrichtung (2) derart ansteuerbar ist, dass bei einem in Listendurchlaufrichtung erfolgenden Markierungswechsel zwischen dem Listenelement (10) und einem oder mehreren weiteren Listenelementen (10') ein korrespondierender Bildlauf in dieselbe Listendurchlaufrichtung für das Informationsfenster des Vorschauelements (11) und das weitere Informationsfenster der Vorschauelemente, die dem einem oder den mehreren weiteren Listenelementen (10') jeweils zugeordnet sind, realisiert wird;
wobei das Eingabeelement (3) einen Drehdrückschalter, eine Walze und/oder einen Taster auf einem Multifunktionslenkrad oder auf einem Lenkstockhebel umfasst; und
wobei eine Informationsmenge der Hauptelemente (12) größer ist als die Informationsmenge der Vorschauelemente (11);
wobei das Listenelement (10) eine Sammelbezeichnung, das Vorschauelement (11) im Informationsfenster eine zusammenfassende Inhaltsübersicht für den Gesamtinhalt des Hauptelements (12) in Form einer schlagwortartigen Zusammenfassung und das Hauptelement (12) den Gesamtinhalt, z. B. einer aktuellen Fahrzeuginformation, bereitstellt;
wobei das Bediensystem (1) derart ausgestaltet ist, dass Vorabinformationen des Vorschauelements (11) und Detailinformationen des Hauptelements (12) ständig oder regelmäßig aktualisiert werden;
wobei der Nutzer einstellen kann, welche schlagwortartigen Zusammenfassungen auf der Anzeigefläche (7) dargestellt werden.

2. Bediensystem (1) nach einem der vorhergehenden Ansprüche, wobei die Anzeigefläche (7) durch die Steuervorrichtung (2) derart ansteuerbar ist, dass im ersten Anzeigemodus durch die Markierung des Listenelements (10) das Vorschauelement (11) zeitgleich oder leicht zeitversetzt zum Betätigungsvorgang, der die Markierung auslöst, bereitgestellt wird.

3. Bediensystem (1) nach einem der vorhergehenden Ansprüche, wobei die Anzeigefläche (7) durch die Steuervorrichtung (2) derart ansteuerbar ist, dass im zweiten Anzeigemodus auf der Anzeigefläche (7) im Wesentlichen ausschließlich das Hauptelement (12) dargestellt wird.

4. Bediensystem (1) nach einem der vorhergehenden Ansprüche, wobei die Anzeigefläche (7) durch die Steuervorrichtung (2) derart ansteuerbar ist, dass im ersten Anzeigemodus zumindest ein Teil des Informationsfensters für das weitere Vorschauelement (11'), das dem zum aktuell markierten Listenelement (10) benachbarten weiteren Listenelement (10') zuzuordnen ist, auf der Anzeigefläche (7) angezeigt wird.

5. Bediensystem (1) nach Anspruch 4, wobei die Anzeigefläche (7) durch die Steuervorrichtung (2) derart ansteuerbar ist, dass im ersten Anzeigemodus zumindest ein Teil des weiteren Informationsfensters für das weitere Vorschauelement (11'), das dem zum aktuell markierten Listenelement (10) benachbarten weiteren Listenelement (10') zuzuordnen ist, im Bereich einer Anzeigenflächenkante (20) angezeigt wird.

6. Bediensystem (1) nach einem der vorhergehenden Ansprüche, wobei die Anzeigefläche (7) durch die Steuervorrichtung (2) derart ansteuerbar ist, dass ein aktueller Zustand des Markierungswechsel (8) im Bereich der Listenelemente (10) durch ein Navigationshilfsmittel (5), beispielsweise in Form einer Darstellung eines Pfeils oder einer Hand mit einem Zeigefinger, visualisiert ist oder im Falle eines Touchscreens durch die Position eines mit dem Touchscreen in Kontakt stehenden Gegenstands festgelegt ist.

7. Bediensystem (1) nach einem der vorhergehenden Ansprüche, wobei die Anzeigefläche (7) durch die Steuervorrichtung (2) derart ansteuerbar ist, dass sich im ersten Anzeigemodus das aktuell markierte Listenelement (10) in seiner visuellen Darstellung, z. B. in Hinblick auf seine Größe oder Hintergrundfarbe, von den nicht-markierten weiteren Listenelementen (10') unterscheidet.

8. Bediensystem (1) nach einem der vorhergehenden Ansprüche, wobei die Anzeigefläche (7) durch die Steuervorrichtung (2) derart ansteuerbar ist, dass ein Verhältnis zwischen dem Flächenanteil des für das Vorschauelement (11) vorgesehenen Informationsfensters (7) und dem Flächenanteil des für das weitere Vorschauelement (11') vorgesehenen Informationsfensters vom aktuellen Zustand des Markierungswechsels (8) abhängt.

9. Bediensystem (1) nach einem der vorhergehenden Ansprüche, wobei das Eingabeelement (3) ein Touchscreen und/oder ein Mittel zur Erfassung von Gesten umfasst.

10. Bediensystem nach einem der vorhergehenden Ansprüche, wobei die Anzeigefläche (7) durch die Steuervorrichtung (2) derart ansteuerbar ist, dass im ersten Anzeigemodus neben den Listenelementen (10, 10') und dem Informationsfenster eine von den Listenelementen (10, 10') und dem Informationsfenster unabhängige Informationsanzeige, wie z. B. ein Tachometer, dargestellt ist.

11. Verfahren zum Bedienen eines Bediensystems (1) nach einem der vorhergehenden Ansprüche, wobei in einem ersten Anzeigemodus ein Markierungswechsel (8) von einem Listenelement (10) zu einem weiteren Listenelement (10') durchgeführt wird, wobei im ersten Anzeigemodus neben der Liste von Listenelementen (10, 10') das Vorschauelement (11) in einem Informationsfenster (7) zum markierten Listenelement (10) angezeigt wird, wobei beim Markierungswechsel (8) ein weiteres Informationsfenster eines weiteren Vorschauelements (11'), das dem weiteren Listenelement (10') zugeordnet ist, an die Stelle des bisherigen Informationsfensters nachgerückt wird und bei einem durch die Auswahl eines Listenelementes veranlassten Wechsel in den zweiten Anzeigemodus auf der Anzeigefläche das Hauptelement (12) statt des Vorschauelements (10) angezeigt wird; wobei die Anzeigefläche (7) durch die Steuervorrichtung (2) derart ansteuerbar ist, dass bei einem in Listendurchlaufrichtung erfolgenden Markierungswechsel zwischen dem Listenelement (10) und einem oder mehreren weiteren Listenelementen (10') ein korrespondierender Bildlauf in dieselbe Listendurchlaufrichtung für das Informationsfenster des Vorschauelements (11) und das weitere Informationsfenster der Vorschauelemente, die dem einen oder den mehreren weiteren Listenelementen (10') jeweils zugeordnet sind, realisiert wird.

12. Fahrzeug, insbesondere Nutzfahrzeug, mit einem Bediensystem (1) nach den Ansprüchen 1 bis 10.

## Claims

1. Operating system (1) for a vehicle, wherein the operating system (1) comprises
-- a display device (6) having a display surface (7), wherein the display device (6) is recessed into a dashboard;
-- a storage apparatus for storing list elements (10, 10') and preview elements (11, 11') and main elements (12) that are assigned to the list element (10, 10') in pairs,
-- an input element (3) for a user to mark and/or select a list element (10, 10') and
-- a control device (2) that is coupled to the display device (7) and the input element (3) and that is able to be used to control a representative display on the display surface (7),
wherein the display surface (7) is able to be actuated by the control device (2) such that,
- in a first display mode, at least some of the list elements (10, 10') are displayed in a list on the display surface (7),
- in order to provide a preview of an overall content of the main element (12) when a list element (10) is marked by way of the input element (3), the preview element (11) that is assigned to the marked list element (10) is displayed next to the list in an information window (7), wherein the information window (7) takes up a larger surface proportion on the display surface (7) than the marked list element (10),
- a marking change (8) is able to be performed by way of the input element (3) from one list element (10) to a further list element (10'),
- upon the marking change (8) in the first display mode, a further information window for a further preview element (11') that is assigned to the further list element (10') moves up to the position of the previous information window;
- a change (9) from the first display mode to a second display mode is brought about by selecting the marked list element (10), wherein, in the second display mode, the main element (12) is displayed on the display surface (7) instead of the preview element (11), in particular instead of the preview element (11) and the list element (10, 10');
wherein the display surface (7) is able to be actuated by the control device (2) such that, in the event of a marking change that takes place in a list run-through direction between the list element (10) and one or more further list elements (10'), corresponding scrolling is performed in the same list run-through direction for the information window of the preview element (11) and the further information window of the preview elements that are each assigned to the one or more further list elements (10');
wherein the input element (3) is a rotary pushbutton switch, a roller and/or a button on a multifunction steering wheel or on a Pitman arm; and
wherein an amount of information in the main elements (12) is larger than the amount of information in the preview elements (11);
wherein the list element (10) provides a collective designation, the preview element (11) in the information window provides a summary content overview for the overall content of the main element (12) in the form of a keyword-type summary and the main element (12) provides the overall content, for example current vehicle information;
wherein the operating system (1) is designed such that preliminary information in the preview element (11) and detailed information in the main element (12) are constantly or regularly updated;
wherein the user is able to set which keyword-type summaries are displayed on the display surface (7).

2. Operating system (1) according to one of the preceding claims, wherein the display surface (7) is able to be actuated by the control device (2) such that, in the first display mode, the preview element (11) is provided at the same time as or in a slightly time-offset manner from the actuation process that triggers the marking through the marking of the list element (10).

3. Operating system (1) according to either of the preceding claims, wherein the display surface (7) is able to be actuated by the control device (2) such that, in the second display mode, the main element (12) is displayed substantially exclusively on the display surface (7).

4. Operating system (1) according to one of the preceding claims, wherein the display surface (7) is able to be actuated by the control device (2) such that, in the first display mode, at least part of the information window for the further preview element (11') that is to be assigned to the further list element (10') adjacent to the currently marked list element (10) is displayed on the display surface (7).

5. Operating system (1) according to Claim 4, wherein the display surface (7) is able to be actuated by the control device (2) such that, in the first display mode, at least part of the further information window for the further preview element (11') that is to be assigned to the further list element (10') adjacent to the currently marked list element (10) is displayed in the region of a display surface edge (20).

6. Operating system (1) according to one of the preceding claims, wherein the display surface (7) is able to be actuated by the control device (2) such that a current state of the marking change (8) is visualized in the region of the list elements (10) by a navigation assistance means (5), for example in the form of a display of an arrow or of a hand with an index finger, or is defined, in the case of a touchscreen, by the position of an object in contact with the touchscreen.

7. Operating system (1) according to one of the preceding claims, wherein the display surface (7) is able to be actuated by the control device (2) such that, in the first display mode, the currently marked list element (10) differs from the unmarked further list elements (10) in terms of its visual display, for example in terms of its size or background colour.

8. Operating system (1) according to one of the preceding claims, wherein the display surface (7) is able to be actuated by the control device (2) such that a ratio between the surface proportion of the information window (7) provided for the preview element (11) and the surface proportion of the information window provided for the further preview element (11') depends on the current state of the marking change (8).

9. Operating system (1) according to one of the preceding claims, wherein the input element (3) comprises a touchscreen and/or a gesture detection means.

10. Operating system according to one of the preceding claims, wherein the display surface (7) is able to be actuated by the control device (2) such that, in the first display mode, an information display independent of the list elements (10, 10') and the information window, such as for example a tachometer, is displayed next to the list elements (10, 10') and the information window.

11. Method for operating an operating system (1) according to one of the preceding claims, wherein, in a first display mode, a marking change (8) is performed from one list element (10) to a further list element (10'), wherein, in the first display mode, the preview element (11) is displayed in an information window (7) for the marked list element (10) next to the list of list elements (10, 10'), wherein, upon the marking change (8), a further information window of a further preview element (11') that is assigned to the further list element (10') is moved up to the position of the previous information window and, in the event of a change, initiated by the selection of a list element, to the second display mode, the main element (12) is displayed on the display surface instead of the preview element (10); wherein the display surface (7) is able to be actuated by the control device (2) such that, in the event of a marking change that takes place in a list run-through direction between the list element (10) and one or more further list elements (10'), corresponding scrolling is performed in the same list run-through direction for the information window of the preview element (11) and the further information window of the preview elements that are each assigned to the one or more further list elements (10').

12. Vehicle, in particular utility vehicle, having an operating system (1) according to one of Claims 1 to 10.

## Revendications

1. Système d'actionnement (1) destiné à un véhicule, le système d'actionnement (1) comprenant
-- un dispositif d'affichage (6) pourvu d'une surface d'affichage (7), le dispositif d'affichage (6) étant intégré dans un tableau de bord ;
-- une unité de mémorisation destinée à mémoriser des éléments de liste (10, 10') ainsi que des éléments de prévisualisation (11, 11') et des éléments principaux (12) qui sont associés par paires à l'élément de liste (10, 10'),
-- un élément d'entrée (3) destiné à marquer et/ou sélectionner un élément de liste (10, 10') par le biais d'un utilisateur et
-- un dispositif de commande (2) qui est couplé au dispositif d'affichage (7) et à l'élément d'entrée (3) et qui permet de commander un affichage de reproduction sur la surface d'affichage (7),
la surface d'affichage (7) pouvant être commandée par le dispositif de commande (2) de manière à ce que
- dans un premier mode d'affichage, au moins une partie des éléments de liste (10, 10') soit affichée dans une liste sur la surface d'affichage (7),
- pour fournir une prévisualisation d'un contenu entier de l'élément principal (12) lorsqu'un élément de liste (10) est marqué au moyen de l'élément d'entrée (3), l'élément de prévisualisation (11), qui est associé à l'élément de liste marqué (10), soit affiché à côté de la liste dans une fenêtre d'information (7), la fenêtre d'information (7) occupant une plus grande fraction de surface sur la surface d'affichage (7) que l'élément de liste marqué (10),
- un changement de marquage (8) puisse être effectué au moyen de l'élément d'entrée (3) d'un élément de liste (10) à un autre élément de liste (10'),
- lors du changement de marquage (8) dans le premier mode d'affichage, une autre fenêtre d'information concernant un autre élément de prévisualisation (11'), qui est associé à l'autre élément de liste (10'), se déplace jusqu'à l'emplacement de la fenêtre d'information précédente ;
- par une sélection de l'élément de liste marqué (10), un changement (9) soit réalisé du premier mode d'affichage à un deuxième mode d'affichage, l'élément principal (12) étant affiché sur la surface d'affichage (7) dans le deuxième mode d'affichage à la place de l'élément de prévisualisation (11), notamment à la place de l'élément de prévisualisation (11) et de l'élément de liste (10, 10') ;
la surface d'affichage (7) pouvant être commandée par le dispositif de commande (2) de manière à ce que, lors d'un changement de marquage dans le sens de défilement de liste entre l'élément de liste (10) et un ou plusieurs autres éléments de liste (10'), un défilement d'image correspondant soit réalisé dans la même direction de défilement de liste pour la fenêtre d'information de l'élément de prévisualisation (11) et l'autre fenêtre d'information des éléments de prévisualisation, qui sont respectivement associés au ou aux autres éléments de liste (10') ;
l'élément d'entrée (3) comprenant un commutateur à poussoir rotatif, une molette et/ou un bouton sur un volant multifonction ou sur un levier de colonne de direction ; et
une quantité d'informations des éléments principaux (12) étant supérieure à la quantité d'informations des éléments de prévisualisation (11) ;
l'élément de liste (10) fournissant une désignation collective, l'élément de prévisualisation (11) dans la fenêtre d'informations fournissant un résumé de tout le contenu de l'élément principal (12) sous la forme d'un résumé de type mot-clé et l'élément principal (12) fournissant tour le contenu, par exemple une information actuelles sur le véhicule ;
le système d'actionnement (1) étant conçu de manière à ce que des informations préliminaires de l'élément de prévisualisation (11) et des informations détaillées de l'élément principal (12) soient constamment ou régulièrement mises à jour ;
l'utilisateur pouvant définir quels résumés de type mot-clé sont affichés sur la surface d'affichage (7).

2. Système d'actionnement (1) selon l'une des revendications précédentes, la surface d'affichage (7) pouvant être commandée par le dispositif de commande (2) de manière à ce que, dans le premier mode d'affichage, par le biais du marquage de l'élément de liste (10), l'élément de prévisualisation (11) apparaisse en même temps ou de manière légèrement décalée dans le temps par rapport au processus d'actionnement qui déclenche le marquage.

3. Système d'actionnement (1) selon l'une des revendications précédentes, la surface d'affichage (7) pouvant être commandée par le dispositif de commande (2) de manière à ce que, dans le deuxième mode d'affichage, sensiblement uniquement l'élément principal (12) soit affiché sur la surface d'affichage (7).

4. Système d'actionnement (1) selon l'une des revendications précédentes, la surface d'affichage (7) pouvant être commandée par le dispositif de commande (2) de manière à ce que, dans le premier mode d'affichage, au moins une partie de la fenêtre d'information destinée à l'autre élément de prévisualisation (11'), qui doit être associé à l'autre élément de liste (10') adjacent à l'élément de liste actuellement marqué (10), soit affichée sur la surface d'affichage (7).

5. Système d'actionnement (1) selon la revendication 4, la surface d'affichage (7) pouvant être commandée par le dispositif de commande (2) de manière à ce que, dans le premier mode d'affichage, au moins une partie de l'autre fenêtre d'information destinée à l'autre élément de prévisualisation (11') qui doit être associé à l'autre élément de liste (10') adjacent à l'élément de liste actuellement marqué (10), soit affichée dans la zone d'un bord de surface d'affichage (20).

6. Système d'actionnement (1) selon l'une des revendications précédentes, la surface d'affichage (7) pouvant être commandée par le dispositif de commande (2) de manière à ce qu'un état actuel du changement de marquage (8) soit visualisé dans la zone des éléments de liste (10) par un moyen de navigation auxiliaire (5), par exemple sous la forme d'une représentation par une flèche ou par une main avec un index, ou soit défini, dans le cas d'un écran tactile, par la position d'un objet en contact avec l'écran tactile.

7. Système d'actionnement (1) selon l'une des revendications précédentes, la surface d'affichage (7) pouvant être commandée par le dispositif de commande (2) de manière à ce que, dans le premier mode d'affichage, l'élément de liste actuellement marqué (10) diffère quant à sa représentation visuelle, par exemple en termes de taille ou de couleur de fond, des autres éléments de liste non marqués (10').

8. Système d'actionnement (1) selon l'une des revendications précédentes, la surface d'affichage (7) pouvant être commandée par le dispositif de commande (2) de manière à ce qu'un rapport entre la fraction de surface de la fenêtre d'information (7) prévue pour l'élément de prévisualisation (11) et la fraction de surface de la fenêtre d'information prévue pour l'autre élément de prévisualisation (11') dépende de l'état actuel du changement de marquage (8).

9. Système d'actionnement (1) selon l'une des revendications précédentes, l'élément d'entrée (3) comprenant un écran tactile et/ou un moyen de détection de gestes.

10. Système d'actionnement selon l'une des revendications précédentes, la surface d'affichage (7) pouvant être commandée par le dispositif de commande (2) de manière à ce que, dans le premier mode d'affichage, un affichage d'informations indépendant des éléments de liste (10, 10') et de la fenêtre d'information, par exemple un compteur de vitesse, est représenté en plus des éléments de liste (10, 10') et de la fenêtre d'informations.

11. Procédé d'actionnement d'un système d'actionnement (1) selon l'une des revendications précédentes, dans un premier mode d'affichage un changement de marquage (8) étant effectué d'un élément de liste (10) à un autre élément de liste (10'), dans le premier mode d'affichage l'élément de prévisualisation (11) étant affiché en plus de la liste d'éléments de liste (10, 10') dans une fenêtre d'informations (7) relative à l'élément de liste marqué (10), lors du changement de marquage (8) une autre fenêtre d'information d'un autre élément de prévisualisation (11'), qui est associé à l'autre élément de liste (10'), étant déplacée jusqu'à l'emplacement de la fenêtre d'information précédente et, lors d'un passage dans le deuxième mode d'affichage ordonné par la sélection d'un élément de liste, l'élément principal (12) étant affiché sur la surface d'affichage à la place de l'élément de prévisualisation (10), la surface d'affichage (7) pouvant être commandée par le dispositif de commande (2) de manière à ce que, lors d'un changement de marquage dans le sens de défilement de liste entre l'élément de liste (10) et un ou plusieurs autres éléments de liste (10'), un défilement d'image correspondant dans la même direction de défilement de liste étant effectué pour la fenêtre d'information de l'élément de prévisualisation (11) et l'autre fenêtre d'information des éléments de prévisualisation qui sont respectivement associés au ou aux autres éléments de liste (10').

12. Véhicule, notamment véhicule utilitaire, comprenant un système d'actionnement (1) selon les revendications 1 à 10.
